# EUROPÄISCHE PATENTSCHRIFT

(11) **EP 2 122 404 B1**
(45) Veröffentlichungstag und Bekanntmachung des Hinweises auf die Patenterteilung: **02.01.2019**
(21) Anmeldenummer: 08715720.2
(22) Anmeldetag: 09.02.2008
(51) Int. Cl.: G02B 21/00, G02B 6/32, G02B 6/26

(54) **KONFOKALES LASERMIKROSKOP**
CONFOCAL LASER MICROSCOPE
MICROSCOPE LASER CONFOCAL

(30) Priorität: 21.02.2007 DE 102007009660
(43) Veröffentlichungstag der Anmeldung: 25.11.2009
(73) Patentinhaber: Carl Zeiss Microscopy GmbH, 07745 Jena (DE)
(72) Erfinder: WILHELM, Stefan, 07743 Jena (DE); HUHSE, Dieter, 12167 Berlin (DE)
(74) Vertreter: Hampe, Holger
(86) Internationale Anmeldenummer: PCT/EP2008/001003
(87) Internationale Veröffentlichungsnummer: WO 2008/101605

(56) Entgegenhaltungen:
- EP-A- 1 686 407
- DE-A1- 10 361 176
- DE-A1- 19 702 753

## Beschreibung

### Stand der Technik

In einem Laser-Scanning-System werden Laser unterschiedlicher Leistungsklassen verwendet. Weiterhin ist ein Laser-Scanning-System durch eine grosse Anzahl von variablen Modulen gekennzeichnet, die als Detektor oder zur Beleuchtung dienen.

Ein konfokales Scanmikroskop enthält ein Lasermodul, das bevorzugt aus mehreren Laserstrahlquellen besteht, die Beleuchtungslicht unterschiedlicher Wellenlängen erzeugen. Eine Scaneinrichtung, in die das Beleuchtungslicht als Beleuchtungsstrahl eingekoppelt wird, weist einen Hauptfarbteiler, einen x-y-Scanner und ein Scanobjektiv auf, um den Beleuchtungsstrahl durch Strahlablenkung über eine Probe zu führen, die sich auf einem Mikroskoptisch einer Mikroskopeinheit befindet. Ein dadurch erzeugter von der Probe kommender Messlichtstrahl wird über einen Hauptfarbteiler und eine Abbildungsoptik auf mindestens eine konfokale Detektionsblende (Detektionspinhole) eines Detektionskanals gerichtet.

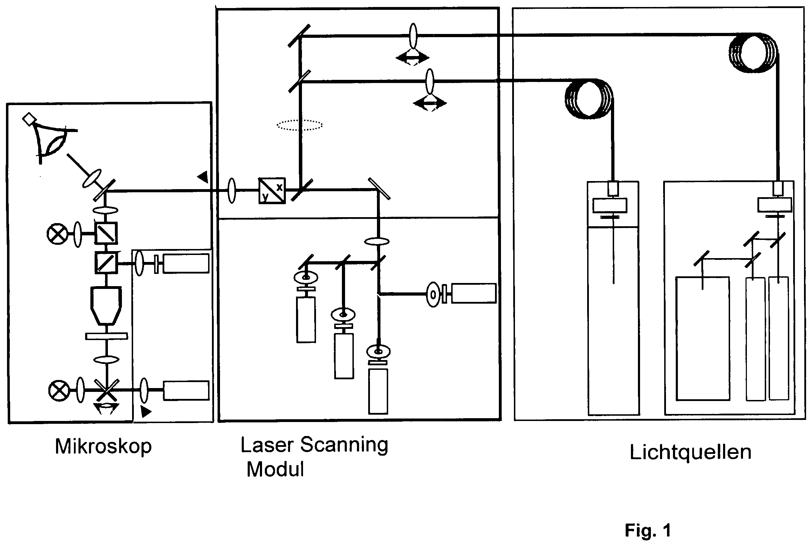

In Fig. 1 ist schematisch ein derartiger Strahlengang eines Laser-Scanning-Mikroskopes dargestellt.

Dargestellt sind hier die Module: Lichtquelle, Scanmodul / Detektionseinheit und Mikroskop. Diese Module werden im folgenden näher beschrieben. Es wird zusätzlich auf DE19702753A1 verwiesen.

Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Der Anregungsstrahlung wird im Lichtquellenmodul erzeugt. Zum Einsatz kommen hierbei verschiedene Laser (Argon, Argon Krypton, TiSa-Laser). Weiterhin erfolgt im Lichtquellenmodul die Selektion der Wellenlängen und die Einstellung der Intensität der benötigten Anregungswellenlänge, z.B. durch den Einsatz eines akusto -optischen Kristalls. Anschließend gelangt die Laserstrahlung über eine Faser oder eine geeignete Spiegelanordnung in das Scanmodul.

Die in der Lichtquelle erzeugte Laserstrahlung wird mit Hilfe des Objektivs beugungsbegrenzt über die Scanner, die Scanoptik und die Tubuslinse in das Präparat fokussiert. Der Fokus rastert punktförmig die Probe in x-y-Richtung ab.

Die Pixelverweilzeiten beim Scannen über die Probe liegen meist im Bereich von weniger als einer Mikrosekunde bis zu einigen 100 Mikrosekunden.

Bei einer konfokalen Detektion (descanned Detection) des Fluoreszenzlichtes, gelangt das Licht, das aus der Fokusebene (Specimen) und aus den darüber- und darunterliegenden Ebenen emittiert wird, über die Scanner auf einen dichroitischen Strahlteiler (MD). Dieser trennt das Fluoreszenzlicht vom Anregungslicht.

Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile außerhalb des Fokus unterdrückt. Durch Variieren der Blendengröße kann die optische Auflösung des Mikroskops eingestellt werden. Hinter der Blende befindet sich ein weiterer dirchroitischer Blockfilter (EF) der nochmals die Anregungsstrahlung unterdrückt. Nach Passieren des Blockfilters wird das Fluoreszenzlicht mittels eines Punktdetektors (PMT) gemessen.

Bei Verwendung einer Mehrphotonen-Absorption erfolgt die Anregung der Farbstofffluoreszenz in einem kleinen Volumen an dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descannte Detektion).

In einer weiteren Anordnung zur Detektion einer durch Mehrphotonenabsorption angeregten Farbstofffluoreszenz erfolgt weiterhin eine descannte Detektion, jedoch wird diesmal die Pupille des Objektives in die Detektionseinheit abgebildet (nichtkonfokal descannte Detektion).

Von einem dreidimensional ausgeleuchteten Bild wird durch beide Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden. Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, dass nur das vom jeweiligen Farbstoff ausgesendete Fluoreszenzlicht vom Punktdetektor gemessen wird.

In biomedizinischen Applikationen werden zur Zeit mehrere verschiedene Zellregionen mit verschiedenen Farbstoffen gleichzeitig markiert (Multifluoreszenz).

Die einzelnen Farbstoffe können mit dem Stand der Technik entweder aufgrund verschiedener Absorptionseigenschaften oder Emissionseigenschaften (Spektren) getrennt nachgewiesen werden. Dazu erfolgt eine zusätzliche Aufspaltung des Fluoreszenzlichts von mehreren Farbstoffen mit den Nebenstrahlteilern (DBS) und eine getrennte Detektion der einzelnen Farbstoffemissionen in getrennten Punktdetektoren (PMT x).

Das LSM LIVE der Carl Zeiss Mic*r*olmaging GmbH realisiert einen sehr schnellen Linienscanner mit einer Bilderzeugung um 120 Bildern pro Sekunde (http://www.zeiss.de/c12567be00459794/Contents-Frame/fd9fa0090eee01 a641256a550036267b).

Die Verbindung der Lichtquellenmodule mit dem Scanmodul erfolgt in der Regel über Lichtleitfasern, wie dies beispielsweise aus der EP 1 686 407 A1 bekannt ist.

Aus DE19702753A1 ist es bekannt, verschiebbare Kollimationsoptiken zur Einkopplung des Laserlichtes aus den Lichtleiterausgängen in den Mikroskopstrahlengang vorzusehen.

Beispielsweise ist hinter der steckbaren Glasfasereinkopplung der UV- (bzw. 405 nm) Beleuchtung ein beweglicher Kollimator angeordnet, der den Farblängsfehler des gerade verwendeten Objektivs ausgleicht, so dass die Fokuspunkte von UV und sichtbarem Licht wieder in einer Ebene liegen. Der bewegliche Kollimator wird dann für jedes Objektiv in eine andere Position gefahren.

Statische Kollimierlinsen im Faserstecker werden in DE 10361176 A1 erwähnt.

Für Transportzwecke, beim Austausch defekter Fasern und auch bei der möglichen Einkopplung anderer Laser besteht die Forderung nach einer Glasfasereinkopplung die justagefrei lös- und wieder steckbar sein soll.

Aus DE 19829988 ist zwar eine Justage der Faser in mehreren Raumrichtungen bekannt, diese ist jedoch relativ aufwendig.

Aus einer Forderung der Justagefreiheit ergeben sich jedoch technische Schwierigkeiten:
Eine normale einmodige Glasfaser für z.B. die Wellenlänge 405 nm hat typischerweise einen Modenfelddurchmesser von 3,5 µm und eine numerische Apertur von 0,1. Das bedeutet für eine justagefreie, reproduzierbare Steckung, dass diese Faser beim wiederholten Stecken an den Scankopf mit einer Ortsgenauigkeit von deutlich unter 1 µm positioniert werden muss, während die Winkelgenauigkeit nur im Bereich von 10 mrad liegen muss. Um die laterale Überlagerung unterschiedlicher Wellenlängen, die separat über Fasern direkt in den Scankopf eingekoppelt werden, bzw. die Positioniergenauigkeit des Laserstrahls zur Systempupille zu gewährleisten, muss die Reproduzierbarkeit einer einfachen Glasfasersteckung also deutlich besser als 1 µm sein, was in der Realität kaum mit vernünftigem mechanischem Justieraufwand zu realisieren ist.

### Beschreibung der Erfindung und ihrer Wirkungen und Vorteile

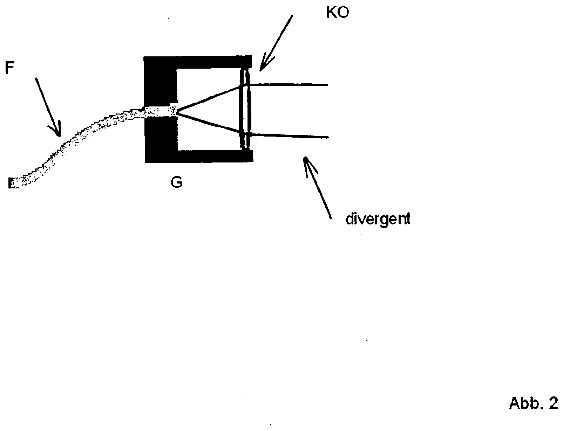

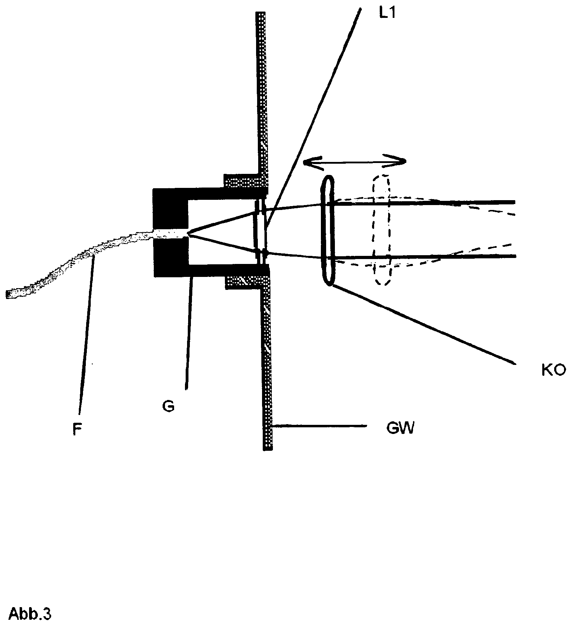

Die Erfindung besteht darin, statt der Kollimation über nur eine verschiebbare Linse eine zwei- oder dreilinsige Kollimation (mit Bewegung der letzten Linse) zu verwenden. Ein Grundaufbau ist in Abb.2 dargestellt:
Statt die Faser direkt an den Scankopf zu stecken, wird eine kompakte
(Steck-) Einheit aus Faser F und Linse L1 verwendet, die, in einem Gehäuse G gelagert fest miteinander verbunden gemeinsam gesteckt wird.
Die Faser F ist fest im Gehäuse gehaltert, das eine Fassung für eine Linse L1 aufweist.
In diesem Stecker könnte beispielsweise die Glasfaser einen Modenfelddurchmesser von 3,5 µm und eine numerische Apertur von 0,1 haben. Die Linse könnte eine Brennweite von f=15mm aufweisen und sich 10 mm vom Faserende entfernt befinden, so dass der Strahl nichtparallel mit einem Abstrahlwinkel aus der Linse austritt. In diesem Fall wäre dann die numerische Apertur des Ausgangsstrahls ca. 0,0333. Das heißt, die Linse ist geringfügig defokussiert. Dieser Stecker kann nun an die Gehäusewand GW des Scankopfs des LSM angesteckt werden, in dem sich wie oben beschrieben ein beweglicher Kollimator (Linse KO) befindet.
Das ist in Abb.3 dargestellt.

Diese Kollimatorlinse könnte dann beispielsweise eine Brennweite von f = 50 mm haben und sich in der "Nullposition" 20 mm hinter der Steckerlinse L1 befinden.
Diese Nullposition entspricht einer mittleren Stellung (beispielsweise rechnerisch ermittelt) um die die Linse KO verschoben werden kann.
In dieser Stellung würde sich ein paralleler Strahl hinter dem Kollimator ergeben. Das heißt, erst durch das zweistufige System aus fest mit der Faser verbundener erster Sammellinse und im Gerät angeordneter, verschiebbarer zweiter Sammellinse erhält man einen kollimierten Strahl. Vorteilhaft an dieser Anordnung ist vor allem, dass man zwei Linsen in geschickter Weise so anordnet, dass ein Stecken und Lösen im Unendlichstrahl möglich ist, weil sich wesentlich entspanntere Toleranzen als beim Stecken und Lösen einer im Fokus einer Sammellinse sitzenden Single Mode Faser ergeben. Die verwendeten Linsenbrennweiten können auch andere sein. Die Brennweite der ersten Linse bestimmt vor allem die Empfindlichkeit des Steckvorgangs. Eine zu lange Brennweite wirkt sich nachteilig auf die Stabilität des Systems aus. In Bezug auf die hier vor allem betrachteten Kerndurchmesser für Single Mode Übertragung im Wellenlängenbereich zwischen 355nm und 675nm liegen die Kerndurchmesser zwischen 2µm und 4µm. Die Brennweite der ersten Linse liegt dann ideal zwischen 10 und 15 mm. Die Brennweite der zweiten Linse ergibt sich dann je nachdem, welcher Strahldurchmesser im kollimierten Fall hinter der zweiten Linse erreicht werden soll. Das zweistufige System insgesamt ist so zu wählen, das für den kollimierten Strahl ist eine optimale Anbindung an das System im Scankopf sichergestellt werden kann.

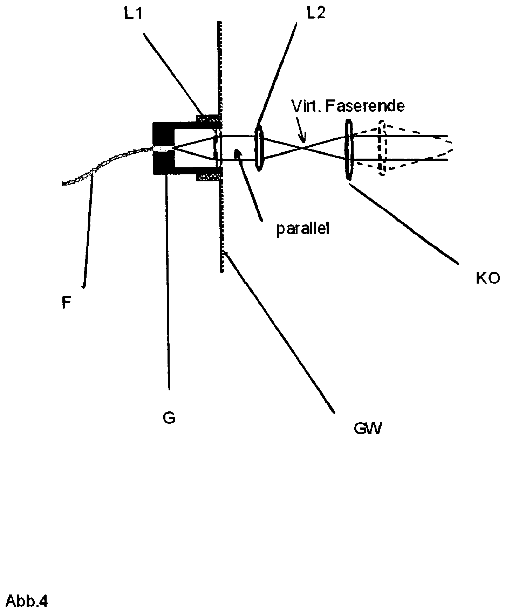

Durch Verschieben des Kollimators kann nun der Farblängsfehler der Objektive ausgeglichen werden, so dass sich der Fokuspunkt der verschiedenen Farben im Objekt wieder in einer Ebene befindet.
Durch die fest mit dem Faserende verbundene erste Linse wirkt dieser Stecker nun so, als würde sich in diesem Stecker eine Glasfaser mit einem größeren Modenfelddurchmesser und einer kleineren Apertur befinden. Dadurch sind die Anforderungen an die Positioniergenauigkeit dieses Steckers gegenüber einem nur die Faser haltenden Steckers entschärft. In dem oben genannten Beispiel sind die Anforderungen an die Ortsgenauigkeit um einen Faktor drei entschärft worden. Dafür sind zwar die Anforderungen an den Winkel um den gleichen Faktor verschärft worden (Verkleinerung des Abstrahlwinkels durch L1), aber hier gibt es fertigungstechnisch gesehen vorteilhaft mehr Spielraum.
Je nach Anwendung, gefordertem Verfahrweg des Kollimators, möglichen Fertigungstoleranzen der Stecker und Buchsen und den allgemeinen Designanforderungen muss der optimale Wert für die Brennweiten und Positionen der jeweiligen Linsen rechnerisch jeweils neu bestimmt werden, die oben angeführten Werte stellen nur ein Beispiel dar.
Das zweistufige System ermöglicht zwar eine Verbesserung, jedoch sind die Anforderungen an die Ortsjustage nach wie vor hoch. Anstatt 0.5µm im einstufigen Aufbau, muss man mit den beispielhaft angegebenen Werten jetzt 1.5µm realisieren.
Um eine wirklich deutliche Entschärfung (z.B. Faktor 100) der Toleranzen für die Ortsgenauigkeit zu erhalten, sind relativ unpraktikable Werte für die einzelnen Brennweiten bzw. Abstände nötig. Die erste Linse könnte beispielsweise eine Brennweite von 15 mm aufweisen und 14,85 mm von der Faser entfernt stehen. Die zweite Linse hätte dann eine Brennweite von z.B. 2000 mm und würde in der Nullposition 515mm von der ersten Linse entfernt stehen.
Dies kann man jedoch durch eine dreistufige Kollimation vorteilhaft verbessern, die in Abb. 4 skizziert ist.
Hier wird der Stecker so aufgebaut, dass aus dem Stecker selbst ein paralleler Strahl austritt (also beispielsweise f = 5 mm und Abstand Faser-Linse L1 in Brennweite = 5 mm).
Im Gehäuse selbst befindet sich eine zweite, vorzugsweise feste Linse L2 (beispielsweise genau die gleiche wie im Stecker). Durch diese zwei Linsen L1, L2 wird das Faserende auf einen Ort im Gehäuse abgebildet, in diesem Beispiel 5 mm hinter der zweiten Linse L2 . Die dritte Linse ist nun wieder der bewegliche Kollimator KO, der je nach den Anforderungen der restlichen Optik gestaltet werden kann, beispielsweise mit einer Brennweite von f = 10 mm.
Der Vorteil dieser Anordnung ist, dass die Anforderungen an die Ortsgenauigkeit der Steckung extrem stark entschärft werden, da aus dem Stecker ein paralleler Lichtstrahl austritt.

Die Erfindung betrifft zusammenfassend:
- Die Kombination aus beweglichem Kollimator zusammen mit einem Faserstecker, in dem die Glasfaser mit einer Linse fest verbunden ist.
- Die Kombination aus Faserkollimator (mit parallelem Strahlengang am Ausgang) zusammen mit einer zweistufigen Kollimationsoptik mit beweglichem Kollimator

Die konkreten Werte der Brennweiten und Abstände können im Rahmen der Erfindung variieren.

Als Linsen können, je nach geforderter Abbildungsqualität, die unterschiedlichsten Linsen (sphärisch, asphärisch, planoconvex, biconvex, usw.) eingesetzt werden.

Als Linsen können, je nach geforderter Abbildungsqualität, Einzellinsen oder Kittglieder eingesetzt werden.

Die Ausführung der Stecker kann nahezu beliebig variieren (Bajonettverschluss, Überwurfmutter, FC-Steckerform, usw.)

## Patentansprüche

1. Konfokales Laser-Scanning-Mikroskop mit mindestens einer Lichtleitfaser (F), einem Stecker und einem Laser, dessen Beleuchtungslicht über die mindestens eine Lichtleitfaser (F) mittels des Steckers in Richtung des Mikroskopobjektives übertragen wird,
wobei der Stecker eine Einheit aus der Lichtleitfaser (F) und einer Linse (L1) ist und an einem ersten Gehäuse eines Scankopfs des Laser-Scanning-Mikroskop steckbar ist und die Lichtleitfaser (F) und die Linse (L1) in einem Gehäuse (G) gelagert und fest miteinander verbundenen sind,
**dadurch gekennzeichnet, dass**
das Gehäuse (G) an seinem der Lichtleitfaser (F) abgewandten Ende in einer Fassung die Linse (L1) als eine erste Optik zur Übertragung des divergent aus der Lichtleitfaser (F) austretenden Laserlichts beinhaltet und ein zumindest teilweise verschieblicher Kollimator (KO) im ersten Gehäuse vorhanden ist, durch deren Wirkung sich hinter dem Kollimator (KO) aus dem divergent aus der Lichtleitfaser (F) austretenden und in Richtung des Kollimators (KO) übertragenen Laserlicht ein paralleler Strahl ergibt.

2. Konfokales Laser-Scanning-Mikroskop nach einem der Ansprüche 1,
**dadurch gekennzeichnet, dass** zwischen der ersten Optik und dem Kollimator (KO) mindestens eine zweite Optik angeordnet ist.

3. Konfokales Laser-Scanning-Mikroskop nach einem der Ansprüche 1 oder 2, **dadurch gekennzeichnet, dass** der Kollimator (KO) aus einer ersten feststehenden und einer zweiten verschieblichen Linse besteht.

4. Konfokales Laser-Scanning-Mikroskop nach einem der Ansprüche 1-3,
**dadurch gekennzeichnet, dass** der Brennpunkt der zweiten Optik und des Kollimators (KO) zur Erzeugung eines Parallelbündels in Richtung des Mikroskops zusammenfallen.

5. Konfokales Laser-Scanning-Mikroskop nach Anspruch 1 **dadurch gekennzeichnet, dass** die erste Optik zur Erzeugung eines divergenten Strahlbündels in einem Abstand unterhalb ihrer Brennweite vom Faserende entfernt angeordnet ist.

## Claims

1. Confocal laser scanning microscope having at least one optical fibre (F), a plug and a laser, the illumination light of which is transmitted via the at least one optical fibre (F) by means of the plug in the direction of the microscope objective,
wherein the plug is a unit made of the optical fibre (F) and a lens element (L1) and is able to be connected to a first housing of a scanning head of the laser scanning microscope, and the optical fibre (F) and the lens element (L1) are held in a housing (G) and are fixedly connected to one another,
**characterized in that**
the housing (G) includes, at its end that is remote from the optical fibre (F), the lens element (L1) as a first optical unit in a mount for transmitting the laser light exiting divergently from the optical fibre (F), and an at least partially displaceable collimator (KO) is provided in the first housing, which has the effect that the laser light which is exiting divergently from the optical fibre (F) and is transmitted in the direction of the collimator (KO) forms a parallel beam behind the collimator (KO).

2. Confocal laser scanning microscope according to Claim 1,
**characterized in that** at least one second optical unit is arranged between the first optical unit and the collimator (KO).

3. Confocal laser scanning microscope according to either of Claims 1 and 2,
**characterized in that** the collimator (KO) consists of a positionally fixed first lens element and a displaceable second lens element.

4. Confocal laser scanning microscope according to one of Claims 1-3,
**characterized in that** the focal points of the second optical unit and of the collimator (KO) coincide for producing a parallel beam in the direction of the microscope.

5. Confocal laser scanning microscope according to Claim 1,
**characterized in that** the first optical unit is arranged at a distance from the fibre end that is less than its focal length for producing a divergent beam of rays.

## Revendications

1. Microscope à balayage laser confocal, comprenant au moins une fibre optique (F), une fiche et un laser, dont la lumière d'éclairage est transmise en direction de l'objectif du microscope par le biais de l'au moins une fibre optique (F) au moyen de la fiche,
le fiche étant un ensemble constitué de la fibre optique (F) et d'une lentille (L1) et pouvant être enfichée au niveau d'un premier boîtier d'une tête de balayage du microscope à balayage laser,
et la fibre optique (F) et la lentille (L1) étant logées dans un boîtier (G) et reliées à demeure l'une à l'autre, **caractérisé en ce que**
le boîtier (G) contient dans une monture, au niveau de son extrémité à l'opposé de la fibre optique (F), la lentille (L1) en tant que première optique servant à la transmission de la lumière laser sortant de manière divergente de la fibre optique (F) et un collimateur (KO) coulissant au moins dans une certaine zone se trouve dans le premier boîtier, sous l'effet duquel un rayon parallèle se produit derrière le collimateur (KO) à partir de la lumière laser sortant de manière divergente de la fibre optique (F) et transmise en direction du collimateur (KO).

2. Microscope à balayage laser selon la revendication 1, **caractérisé en ce qu'**au moins une deuxième optique est disposée entre la première optique et le collimateur (KO).

3. Microscope à balayage laser selon l'une des revendications 1 ou 2, **caractérisé en ce que** le collimateur (KO) se compose d'une première lentille fixe et d'une deuxième lentille coulissante.

4. Microscope à balayage laser selon l'une des revendications 1 à 3, **caractérisé en ce que** les points focaux de la deuxième optique et du collimateur (KO) coïncident en vue de générer un faisceau parallèle en direction du microscope.

5. Microscope à balayage laser selon la revendication 1, **caractérisé en ce que** la première optique est disposée espacée de l'extrémité de la fibre à une distance inférieure à sa distance focale en vue de générer un faisceau de rayons divergeant.
